# EUROPÄISCHE PATENTANMELDUNG

(11) **EP 1 967 258 A1**
(43) Veröffentlichungstag der Anmeldung: **10.09.2008**
(21) Anmeldenummer: 07103597.6
(22) Anmeldetag: 06.03.2007
(51) Int. Cl.: B01F 3/08, B01F 3/12, B01F 5/10, B01F 15/02, B01F 15/04

(54) **Verfahren zum Mischen einer Flüssigkeit mit mindestens einer weiteren Substanz und Entgasen des Gemisches und für die Abgabe des Gemisches**

(71) Anmelder: Interglass Technology AG, 6330 Cham (CH)
(72) Erfinder: Arnet, Roman, 6373 Ennetbürgen (CH); Gautschi, Rudolf, 6005 Luzern (CH)
(74) Vertreter: Falk, Urs

(57) **Zusammenfassung**

Eine Flüssigkeit wird mit mindestens einer weiteren Substanz gemischt, das flüssige Gemisch entgast und abgegeben, indem das Gemisch in einer Vorbereitungsphase mit den folgenden Schritten aufbereitet wird:
A) Bereitstellen von mindestens zwei Ausgangssubstanzen in getrennten Behältern (2, 3), wobei mindestens eine der Ausgangssubstanzen eine Flüssigkeit ist;
B) Befördern einer Ausgangssubstanz nach der andern aus ihrem Behälter (2, 3) in den Tank (4);
C) Beaufschlagen des Tanks (4) vor oder nach dem Schritt B mit Vakuum;
D) Rühren der Substanzen im Tank (4), um die eingefüllten Substanzen zu mischen, wobei das Gemisch eine Flüssigkeit ist;
E) Rühren der Flüssigkeit im Tank (4), um die Flüssigkeit zu entgasen;

und indem in einer Produktionsphase der Tank (4) mit Druckluft beaufschlagt wird, um Flüssigkeit aus dem Tank (4) in eine mit einem Prozessventil (15) versehene Ausgangsleitung (14) abzugeben.

## Beschreibung

Die Erfindung betrifft ein Verfahren zum Mischen einer Flüssigkeit mit mindestens einer weiteren Substanz und Entgasen des Gemisches und für die Abgabe des Gemisches.

Es gibt verschiedene Anwendungen, bei denen eine Flüssigkeit und mindestens eine weitere Substanz, z.B. eine weitere Flüssigkeit, zusammengeführt und gemischt werden müssen, wobei keine Blasen entstehen dürfen. Eine solche Anwendung ist beispielsweise die Herstellung von Linsen durch Giessen. Dabei wird ein flüssiges Monomer, das eine einzelne Flüssigkeit oder ein aus mindestens zwei Flüssigkeiten bestehendes Gemisch sein kann, in eine durch zwei Formschalen und eine Dichtung begrenzte Kavität gegossen und polymerisiert, wobei die Linse entsteht. Dabei stellt sich immer wieder das Problem, dass die fertige Linse eingeschlossene Luftblasen und/oder Schlieren enthält. Um dies zu verhindern, muss das Monomer vor dem Eingiessen in die Kavität entgast werden.

Die europäische Patentanmeldung EP 671254 weist auf ein bis anno dazumal übliches Verfahren für die Entgasung eines Monomers hin, bei dem das Monomer in einen Rotationsverdunster gefüllt wird, wo das Monomer während einer vorbestimmten Zeitdauer gleichzeitig gerührt und Vakuum ausgesetzt wird. Dabei entweichen im Monomer eingeschlossene Luftblasen und werden abgesogen. Anschliessend wird das Monomer unter Stickstoffatmosphäre gelagert, bis es verwendet wird zum Giessen der Linsen. Die Nachteile dieses Verfahrens sind gemäss der EP 671254, dass die Lagerung unter Stickstoffatmosphäre zur Folge habe, dass einzig Sauerstoff durch Stickstoff ersetzt werde und dass beim Giessen sorgfältig darauf geachtet werden müsse, dass das Monomer möglichst nicht in Kontakt mit Sauerstoff komme, da es sonst sofort wieder Sauerstoff aufnehme. Ein weiterer Nachteil sei, dass beim Entgasen unter Vakuum auch andere im Monomer enthaltene Substanzen entweichen und dadurch die Zusammensetzung des Monomers ändern könnten. Die EP 671254 schlägt für die Entgasung deshalb ein Verfahren vor, bei dem das Monomer aus dem Tank durch einen Entgaser hindurch zur Moldkavität gepumpt wird. Das Monomer wird also während der Produktionsphase unmittelbar vor dem Einfüllen in die Kavität entgast. Der Entgaser besteht aus Röhren aus luftdurchlässigem Material, die in einer Vakuumkammer gelagert sind.

Diese beiden Verfahren sind auch in der internationalen Patentanmeldung WO 03/074149 gewürdigt und dort als eher untauglich beschrieben. Die WO 03/074149 offenbart einen neuen Entgaser, der den Entgaser der EP 671254 ersetzt.

Bei diesen drei beschriebenen Verfahren wird entweder das Monomer oder das fertige Monomergemisch vor dem Eingiessen entgast.

Das Patent US 5973098 beschreibt ein für die Herstellung von Linsen geeignetes polymerisierbares Gemisch, das aus zwei Substanzen besteht. Die beiden Substanzen werden über zwei Spritzen portionenweise einer Mischkammer zugeführt und dort durch Rühren miteinander vermischt, wobei die Mischkammer unter Vakuum stehen kann. Anschliessend wird das Gemisch mittels eines Inertgases aus der Mischkammer in die Moldkavität gepresst. Nachteilig bei diesem Verfahren ist, dass eine ausreichende Entgasung, auch wenn es sich nur um eine kleine Portion handelt, relativ lange dauert.

Die internationale Patentanmeldung WO 2005/084927 beschreibt einen Prozess, bei dem zwei Substanzen einer Mischkammer zugeführt und dann mittels eines Kolbens in die Moldkavität gepresst werden. Die Moldkavität ist so ausgebildet, dass allfällige Luftblasen entweichen können. Eine Entgasung vor dem Eingiessen des Monomers findet hier nicht statt.

Die Erfindung betrifft das Zusammenführen und Mischen von mindestens zwei flüssigen Substanzen und die Entgasung des Gemisches. Die Erfindung eignet sich beispielsweise zur Herstellung von Linsen durch Giessen, bei dem ein aus mindestens zwei Flüssigkeiten bestehendes Gemisch in eine Moldkavität abgefüllt wird. Die Flüssigkeiten sind einzeln über längere Zeit haltbar. Das Gemisch hingegen ist nur über einen Zeitraum von wenigen Tagen haltbar.

Der Erfindung liegt die Aufgabe zugrunde, ein Verfahren für das Zusammenführen und Mischen von mindestens zwei flüssigen Substanzen und die Entgasung des Gemisches zu entwickeln.

Die Erfindung besteht in den im Anspruch 1 angegebenen Merkmalen. Vorteilhafte Ausgestaltungen ergeben sich aus den abhängigen Ansprüchen.

Die Erfindung wird anhand eines ausgewählten Anwendungsbeispiels erläutert. Das Anwendungsbeispiel betrifft die Herstellung von Linsen durch Giessen, bei dem eine in einem Tank bereitgestellte Flüssigkeit unter Anwendung von Druck über eine Ausgangsleitung einer Hohlnadel zugeführt wird, deren Spitze in eine durch zwei Formschalen und ein Dichtungselement begrenzte Moldkavität mündet. Die Moldkavität ist nach oben offen und steht unter atmosphärischem Druck. Die Flüssigkeit ist ein Gemisch aus einer Flüssigkeit und mindestens einer weiteren Substanz, die flüssig oder auch pulverförmig sein kann. Das erfindungsgemässe Verfahren umfasst eine Vorbereitungsphase, bei der die Flüssigkeit mit der mindestens einen weiteren Substanz zusammengeführt, gemischt und entgast wird, mit den Schritten:
A) Bereitstellen von mindestens zwei Ausgangssubstanzen in getrennten Behältern, wobei mindestens eine Ausgangssubstanz eine Flüssigkeit ist;
B) Befördern einer Ausgangssubstanz nach der ändern aus dem entsprechenden Behälter nach dem andern in einen Tank, wobei, bevorzugt, jede einzelne Füllmenge mit einer Wägezelle abgemessen wird;
   Falls die Ausgangssubstanz eine Flüssigkeit ist, geschieht dies durch Pumpen.
C) Beaufschlagen des Tanks vor oder nach dem Schritt B mit Vakuum;
   Die zu mischenden Substanzen befinden sich nun im richtigen Verhältnis im Tank, wobei die Substanzen nach dem Mischen eine Flüssigkeit sind.
D) Rühren des Gemisches im Tank, um die eingefüllten Substanzen zu mischen;
E) Rühren des Gemisches im Tank, um das Gemisch zu entgasen;
   und eine Produktionsphase, während der das entgaste Gemisch als Flüssigkeit aus dem Tank abgegeben wird. Die Produktionsphase umfasst die Schritte:
F) Beaufschlagen des Tanks mit Druckluft. Dies erfolgt entweder bereits am Ende der Vorbereitungsphase oder spätestens mit Beginn der Produktionsphase; und
G) Abgabe von Flüssigkeit aus dem Tank durch eine Ausgangsleitung, wobei jeweils ein in der Ausgangsleitung angeordnetes Prozessventil temporär geöffnet wird.

Zum Giessen einer Linse wird also das in der Ausgangsleitung zwischen dem Tank und der Hohlnadel angeordnete Prozessventil geöffnet und wieder geschlossen, sobald die Moldkavität gefüllt ist.

Die Schritte D und E fallen automatisch zu einem einzigen Schritt zusammen, wenn das Rühren des Gemisches bei beiden Schritten mit der gleichen Rührgeschwindigkeit erfolgt.

Das Druckniveau im Tank kann bei Bedarf an wechselnde Anforderungen angepasst werden. Beim Giessen von Linsen bestimmt z.B. die engste Stelle bei der Einfüllöffnung der Moldkavität, mit welcher Fliessgeschwindigkeit die Flüssigkeit zugeführt werden kann, ohne dass ein Rückstau entsteht und die Moldkavität überströmt wird. Um die Zeitdauer für das Füllen möglichst kurz halten zu können, wird mit Vorteil das Druckniveau des von der Druckluft im Tank ausgeübten Drucks vor dem Giessen der Linse auf einen Wert gebracht, der vom Abstand an der engsten Stelle der Einfüllöffnung abhängt, wobei das Druckniveau mit zunehmendem Abstand kontinuierlich oder in diskreten Stufen zunimmt.

Die im Innern des Tanks herrschende Temperatur wird bevorzugt mindestens während der Produktionsphase auf einen vorbestimmten Wert geregelt, damit die Flüssigkeit eine optimale Viskosität aufweist.

Vorteilhaft ist auch, die Substanzen im Schritt B portionenweise in den Tank zu pumpen, damit die Schaumentwicklung möglichst gering bleibt.

Beim Giessen von Linsen wird als Sensor für die Detektion, wann die Moldkavität mit Flüssigkeit gefüllt ist, mit Vorteil eine weitere Hohlnadel verwendet, die mit Luft beaufschlagt wird, so dass permanent ein geringer Luftstrom aus der Hohlnadel entweicht. Sobald die Flüssigkeit in der Moldkavität die Spitze der Hohlnadel erreicht, steigt der Druck im Inneren der Hohlnadel an. Dieser Druckanstieg wird gemessen und für die Erzeugung des Schliessbefehls für das Prozessventil verwendet.

Die Erfindung wird nachfolgend anhand einer für die Durchführung des Verfahrens geeigneten Vorrichtung und anhand der Zeichnung beispielhaft erläutert. Das Beispiel bezieht sich auf eine Vorrichtung zum Giessen von Linsen, die Vorrichtung lässt sich aber sinngemäss benutzen für andere Anwendungen, bei denen eine Flüssigkeit mit anderen Substanzen zu mischen ist, ohne dass im Gemisch Blasen entstehen. Bei diesem Beispiel werden Flüssigkeiten gemischt. Es zeigen
- Fig. 1, 2: in perspektivischer und schematischer Darstellung eine für die Durchführung des erfindungsgemässen Verfahrens geeignete Apparatur und Fig. 2 zudem im Schnitt eine Moldkavität, und
- Fig. 3: im Schnitt eine weitere Moldkavität.

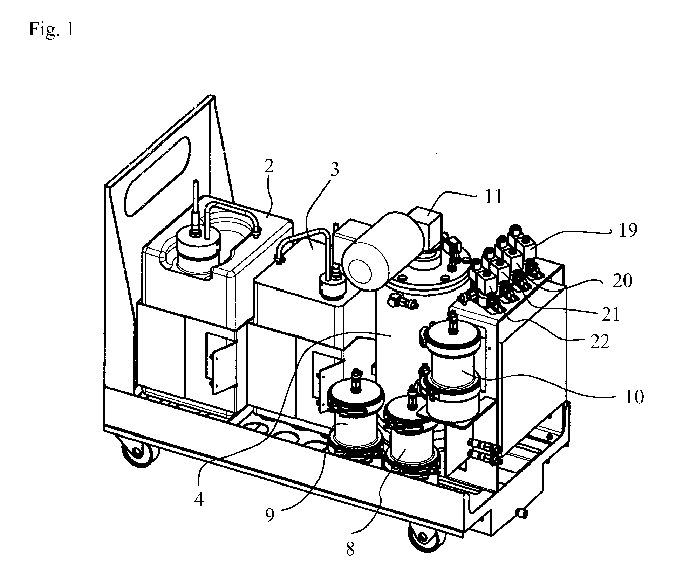

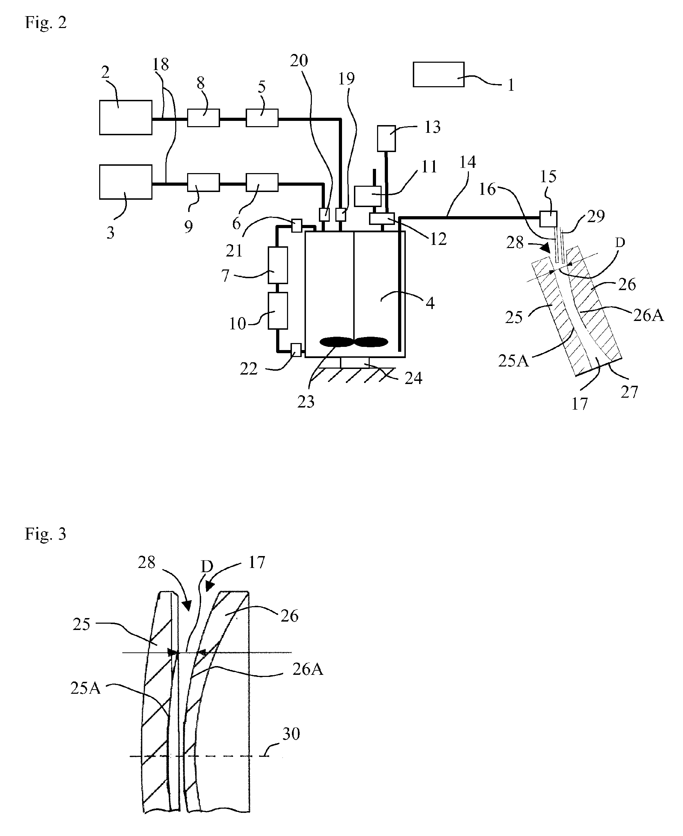

Die Fig. 1 zeigt in perspektivischer Darstellung eine für die Durchführung des erfindungsgemässen Verfahrens geeignete Apparatur. Die Fig. 2 zeigt die Apparatur schematisch und nicht massstäblich. Im Beispiel ist die Apparatur auf einem Wagen aufgebaut und wird in einer vollautomatischen Maschine für die Herstellung von Linsen eingesetzt. Die Apparatur umfasst eine Steuereinrichtung 1, zwei Plätze für die Aufnahme je eines Behälters 2 und 3 mit den Ausgangssubstanzen, einen temperaturgeregelten Tank 4, drei Filter 5, 6 und 7, drei Pumpen 8 bis 10, einen Druckregler 11, ein Umschaltventil 12, das den Tank 4 entweder mit dem Druckregler 11 oder einer Vakuumquelle 13 verbindet, eine Ausgangsleitung 14 mit einem Prozessventil 15 und einer Hohlnadel 16, durch die das in eine Moldkavität 17 einzufüllende Monomergemisch abgegeben wird, sowie diverse Verbindungsleitungen 18 und weitere Ventile 19 - 22. Im Tank 4 ist ein Rührwerk 23 integriert. Der Tank 4 befindet sich auf einer Wägezelle 24, z. B. einer Wägezelle der Firma Pesa. Der Tank 4 belastet die Wägezelle 24 also mit seinem Gewicht. Der Druckregler 11 wird mit Druckluft versorgt.

Die drei Pumpen 8 bis 10 sind vorzugsweise Membranpumpen. Die erste Membranpumpe 8 dient dazu, Flüssigkeit aus dem ersten Behälter 2 durch den ersten Filter 5 und das erste Ventil 19 hindurch in den Tank 4 zu pumpen, wobei allfällige Verunreinigungen der Flüssigkeit im Filter 5 zurückbleiben. Die zweite Membranpumpe 9 dient analog dazu, Flüssigkeit aus dem zweiten Behälter 3 durch den zweiten Filter 6 und das zweite Ventil 20 hindurch in den Tank 4 zu pumpen. Die Membranpumpen 8 und 9 ermöglichen es, die Flüssigkeiten portionenweise in kleinen Portionen, sogar tröpfchenweise, zuzuführen, was in Verbindung mit der Wägezelle 24 eine sehr genaue gewichtsmässige Dosierung der Füllmenge ermöglicht. Im Beispiel sind die Filter 5 bis 7 in die zugehörige Pumpe 8 bzw. 9 bzw. 10 integriert.

Die Apparatur ist vorgesehen für den Einsatz auf einer vollautomatisierten Maschine für die Herstellung von Linsen, die insbesondere als Augengläser zugeschnitten und in Brillen eingesetzt werden. Dabei wird jede Linse nach einem eigenen Rezept hergestellt. Die Linse entsteht, indem ein Monomer oder Monomergemisch in die Moldkavität 17 eingefüllt und dann polymerisiert wird. Die Flüssigkeit wird über die Hohlnadel 16 zugeführt, deren Spitze am oberen Ende in die Moldkavität 17 mündet. Die Moldkavität 17 ist gebildet durch zwei Formschalen 25, 26 und ein Dichtungselement 27 und ist gegenüber der Vertikalen um einen vorbestimmten Winkel geneigt, so dass die Flüssigkeit auf der Innenseite 25A der einen Formschale 25 nach unten fliesst und die Moldkavität 17 sukzessive füllt. Die Moldkavität 17 ist druckmässig gegenüber der Umgebung nicht abgedichtet. Sie steht also unter atmosphärischem Druck. In der Fig. 2 ist die Moldkavität 17 um ein Vielfaches vergrössert dargestellt.

Die Maschine umfasst mehrere Einheiten, nämlich einen Speicher für die Lagerung einer Vielzahl von Formschalen, ein Transportsystem für den Transport der Formschalen bzw. der Moldkavität, eine Verbundstation, in der zwei Formschalen mit einem Dichtungselement zur Moldkavität verbunden werden, eine Füllstation, wo das Monomer in die Moldkavität gegossen wird, eine UV Station, wo das Monomer polymerisiert und teilweise ausgehärtet und somit die Linse gebildet wird, einen Ofen, wo die Linse vollständig ausgehärtet wird, und eine Trennstation, wo die fertige Linse von der Moldkavität getrennt wird. Die Maschine wird von einem Computer gesteuert. Die geometrischen Daten der Formschalen sind im Computer gespeichert.

Zu Beginn ist der Tank 4 leer und in gereinigtem Zustand. Die Behälter 2 und 3 enthalten die Ausgangssubstanzen, im Beispiel je ein flüssiges Monomer, die gemischt und entgast werden und dann als Monomergemisch für das Giessen der Linsen bereitstehen. Das Prozessventil 15 ist geschlossen. Das erfindungsgemässe Verfahren für das Mischen und Entgasen der Ausgangssubstanzen und das Giessen der Linsen umfasst eine Vorbereitungsphase, allenfalls eine Wartephase, und eine Produktionsphase mit den folgenden Verfahrensschritten:
A) Bereitstellen von mindestens zwei als Ausgangssubstanzen dienenden Flüssigkeiten in getrennten Behältern.
   Im folgenden wird davon ausgegangen, dass die Zahl der Ausgangssubstanzen zwei beträgt. Falls die Zahl der Ausgangssubstanzen grösser ist, ist das Verfahren entsprechend anzupassen.
B) Füllen des Tanks 4 gemäss den folgenden Unterschritten:
   B1) Pumpen von Flüssigkeit aus dem ersten Behälter 2 in den Tank 4, bis die Wägezelle 24 einen ersten vorbestimmten Wert anzeigt. Anschliessend wird das Ventil 19 geschlossen, damit der Behälter 2 und der Tank 4 druckmässig getrennt sind.
   B2) Pumpen von Flüssigkeit aus dem zweiten Behälter 3 in den Tank 4, bis die Wägezelle 24 einen zweiten vorbestimmten Wert anzeigt. Anschliessend wird auch das zweite Ventil 20 geschlossen, damit der Behälter 3 und der Tank 4 druckmässig getrennt sind.
   Flüssigkeiten können in den Tank 4 gepumpt werden. Falls die einzufüllende Substanz jedoch keine Flüssigkeit ist, sondern zum Beispiel ein Pulver, dann wird sie auf eine entsprechende adäquate Weise in den Tank befördert.
C) Beaufschlagen des Tanks (4) spätestens nach dem Schritt B2 mit Vakuum.

Wie aus der Fig. 2 ersichtlich ist, enden die Verbindungsleitungen 18 von den Behältern 2 bzw. 3 zum Tank 4 oben am Tankdeckel. Beim Einfüllen fällt die Flüssigkeit daher tröpfchenweise hinunter. Dabei entsteht Schaum. Um die Schaumentwicklung so gering wie möglich zu halten, wird der Tank 4 bevorzugt bereits vor dem Schritt B1 mit Vakuum beaufschlagt, d.h. der Schritt C erfolgt vorzugsweise bereits vor dem Schritt B1.

Die Ausgangssubstanzen werden nach Gewicht eingefüllt. Die vom Tank 4 belastete Wägezelle 24 ermöglicht es, insbesondere in Verbindung mit der portionenweisen Zuführung der Flüssigkeit durch die Membranpumpe 8 bzw. 9, das Soll-Gewicht der einzufüllenden Flüssigkeit und damit das Verhältnis der beiden Flüssigkeiten mit grosser Genauigkeit zu erreichen.

### D1) Mischen der Flüssigkeiten im Tank 4.

Das Mischen der Flüssigkeiten erfolgt durch Rühren mit dem Rührwerk 23 während einer vorbestimmten Zeitdauer Ti. Die Drehzahl des Rührwerks 23 ist relativ klein, damit möglichst wenig Schaum entsteht.

### D2) Reinigen der Flüssigkeit im Tank 4. Dieser Schritt ist fakultativ.

Auch wenn der Tank 4 vor dem Abfüllen der Flüssigkeiten sorgfältig gereinigt worden ist, können dennoch Verunreinigungen zurückgeblieben sein. Um solche Verunreinigungen herauszufiltern, werden die beiden Ventile 21 und 22 geöffnet und die Flüssigkeit während einer vorbestimmten Zeitdauer τ₂ mit der Umwälzpumpe 10 in einem geschlossenen Kreislauf durch den dritten Filter 7 gepumpt. Anschliessend werden die beiden Ventile 21 und 22 wieder geschlossen.

### E) Entgasen der Flüssigkeit im Tank 4.

Das Entgasen erfolgt durch Rühren mit dem Rührwerk 23 während einer vorbestimmten Zeitdauer τ₃. Die Drehzahl des Rührwerks 23 ist wiederum relativ klein, um die Entwicklung von Schaum zu verhindern.

Die Schritte D1 und E unterscheiden sich nur darin, dass die Drehzahl des Rührwerks 23 im Schritt D1 während des Mischens grösser ist als im Schritt E während des Entgasens. Falls genügend Zeit zur Verfügung steht, kann das Mischen der Flüssigkeiten mit der gleichen Drehzahl des Rührwerks 23 erfolgen wie das Entgasen. Die Verfahrensschritte D1 und E können also auch ein einziger gemeinsamer Verfahrenschritt sein.

Die Vorbereitungsphase ist nun abgeschlossen, weil die Flüssigkeit im Tank 4 durchmischt und entgast und somit fertig aufbereitet ist, um Linsen giessen zu können. Bis die Produktionsphase beginnt, wird der Tank 4 entweder unter Vakuum oder bereits auf geringem Überdruck gehalten. Diese Phase wird als Wartephase bezeichnet.

Die Temperatur des Tanks 4 wird auf einen vorbestimmten Wert geregelt, der so hoch bemessen ist, dass die Viskosität der Flüssigkeit im Tank 4 genügend tief ist, um das problemlose Giessen der Linsen zu ermöglichen. Im Beispiel ist der Tank 4 ein thermisch träger Stahltank, seine Temperatur wird deshalb permanent auf den vorbestimmten Wert geregelt, obwohl dies nur während der Produktionsphase nötig wäre.

### F) Giessen der Linsen

Die Form und Grösse der Moldkavität 17 variiert entsprechend dem Linsenrezept. Die beiden Formschalen 25 und 26 sind in der Regel auf ihrer der Moldkavität 17 zugewandten Seite als zylinderförmige Flächen 25A und 26A ausgebildet. Gegen den Rand hin ist die vordere Formschale 25 (im Fachjargon "front mold" genannt) auf ihrer der Moldkavität 17 zugewandten Seite abgeplattet, damit eine Einfüllöffnung 28 entsteht, die genügend gross ist, dass die Hohlnadel 16 in die Einfüllöffnung 28 eingeführt werden kann. Die engste Stelle der Einfüllöffnung 28 ist bei manchen Kombinationen von Formschalen relativ gering. Das Monomer muss bei solchen Kombinationen mit vergleichsweise geringer Fliessgeschwindigkeit eingefüllt werden, da sich sonst an der engsten Stelle ein Rückstau bildet und die zugeführte Flüssigkeit die Moldkavität 17 überströmt. Bei anderen Kombinationen ist die engste Stelle der Einfüllöffnung 28 relativ gross und das Monomer kann mit vergleichsweise grösserer Fliessgeschwindigkeit eingefüllt werden, ohne dass sich ein Rückstau bildet. Bei gewissen Gläsern (wie in der Fig. 2 dargestellt) ist die engste Stelle der Einfüllöffnung 28 nahezu immer vergleichsweise gross und für das Einfüllen nicht kritisch. Bei andern Gläsern (wie in der Fig. 3 dargestellt), deren optische Achse mit dem Bezugszeichen 30 bezeichnet ist, ist die engste Stelle hingegen oftmals sehr schmal. Der Computer bestimmt anhand des Linsenrezepts, welche zwei Formschalen 25 und 26 für die Bildung der Moldkavität 17 aus dem Speicher geholt werden müssen und in welchem Abstand und in welcher relativen Drehlage zueinander die Formschalen 25 und 26 zu positionieren sind. Der Computer errechnet aus den geometrischen Daten der Formschalen 25 und 26 und dem Linsenrezept zudem, wie gross der Abstand D an der engsten Stelle der Einfüllöffnung 28 ist, und bestimmt, mit welchem Druck der Tank 4 zu beaufschlagen ist, damit die Moldkavität 17 mit optimaler Fliessgeschwindigkeit der Flüssigkeit gefüllt werden kann. Optimale Fliessgeschwindigkeit bedeutet, dass die Fliessgeschwindigkeit einerseits möglichst gross ist, damit die für das Füllen der Moldkavität 17 benötigte Zeit möglichst kurz ist, und dass die Fliessgeschwindigkeit andererseits gering genug ist, damit sich an der engsten Stelle der Einfüllöffnung 28 kein Rückstau bildet. Im Beispiel kann der Druck mittels des Druckreglers 11 auf n verschiedene diskrete Druckniveaus p₁ bis pₙ eingestellt werden, es ist z. B. n = 8. Jedem Druckniveau p₁ bis pₙ ist ein Bereich des Abstands D zugeordnet, so dass der Computer nach der Berechnung des Abstands D das zugehörige Druckniveau p; aus den Werten p₁ bis pₙ auswählen kann.

Spätestens zu Beginn der Produktionsphase wird im Tank 4 ein vorbestimmtes Druckniveau aufgebaut, das über dem Atmosphärendruck liegt. Der Druckaufbau erfolgt langsam, um die Entstehung von Luftbläschen in der Flüssigkeit zu vermeiden. Sobald der Druck aufgebaut ist, kann eine Linse nach der anderen gegossen werden. Das Giessen jeder Linse erfolgt entsprechend den Schritten:
F) Erhöhen oder Absenken des Drucks auf ein Druckniveau pₖ, das entsprechend dem Abstand D für eine optimale Fliessgeschwindigkeit ausgelegt ist,
G) Öffnen des Prozessventils 15,
H) Schliessen des Prozessventils 15, sobald die Moldkavität 17 gefüllt ist.

Die Änderung des Drucks im Schritt F erfolgt sachte, damit keine Luftblasen erzeugt werden. Da der im Tank 4 herrschende Druck über dem Atmosphärendruck liegt, fliesst Flüssigkeit in die Moldkavität 17, sobald das Prozessventil 15 geöffnet wird. Das Druckniveau im Tank 4 bestimmt die Fliessgeschwindigkeit.

Es ist im Prinzip auch möglich, nur ein einziges Druckniveau zu verwenden und die Fliessgeschwindigkeit nicht zu steuern, allerdings dauert dann das Giessen einer grossen Moldkavität entsprechend lange. In diesem Fall ist das vorbestimmte Druckniveau für den kleinsten zu erwartenden Abstand D der Einfüllöffnung 28 aller möglichen Moldkavitäten ausgelegt und der Schritt F entfällt.

Das Prozessventil 15 ist vorzugsweise ein blasenfrei schaltendes Ventil, das zudem im geschlossenen Zustand einen Rücksaugeffekt zeigt, der das Ausfliessen von Flüssigkeit vor und nach dem Giessen einer Linse verhindert. Ein geeignetes Ventil ist beispielsweise das Ventil LVC23U-S06 der japanischen Firma SMC. Die Verwendung eines blasenfrei schaltenden Ventils gewährleistet, dass beim Ein- und Ausschalten des Ventils keine Luftblasen entstehen.

Als Sensor für die Detektion, wann die Moldkavität 17 mit Flüssigkeit gefüllt ist, d.h. wann die in die Moldkavität 17 eingefüllte Flüssigkeit ein vorbestimmtes Füllstandsniveau erreicht hat, dient vorzugsweise eine weitere Hohlnadel 29, die mit Luft beaufschlagt wird, so dass aus der Hohlnadel 29 permanent ein sehr kleiner Luftstrom entweicht. Sobald die in die Moldkavität 17 eingefüllte Flüssigkeit die Spitze der Hohlnadel 29 erreicht hat, erhöht sich der Druck in der Hohlnadel 29 sehr schnell. Der Druck in der Hohlnadel 29 wird mittels eines Drucksensors gemessen. Der Druckanstieg erzeugt das Signal für die Auslösung des Schrittes H, d.h. zum Schliessen des Prozessventils 15.

Der Tank 4 ist mit Vorteil so gross bemessen, dass eine Tankfüllung ausreicht, um einen Arbeitstag lang Linsen giessen zu können. Die Produktion der Linsen gestaltet sich dann so, dass der Tank 4 während der Nacht gemäss den Schritten B, C, D1 und E oder auch allen Schritten B bis E nachgefüllt und vorbereitet wird, so dass tagsüber von morgens bis abends Linsen produziert werden können. In der Regel ist der Tank 4 am Abend nicht vollständig entleert. Er wird dann in der folgenden Nacht auf ein vorbestimmtes Niveau aufgefüllt. Falls die Produktion auf mehr als eine Schicht erhöht werden soll, dann kann der Tank 4 vergrössert oder es können zwei solche Apparaturen im Wechsel eingesetzt werden.

## Patentansprüche

1. Verfahren zum Mischen einer Flüssigkeit mit mindestens einer weiteren Substanz und Entgasen des Gemisches und für die Abgabe des Gemisches, **gekennzeichnet durch** eine Vorbereitungsphase mit den Verfahrensschritten:
A) Bereitstellen von mindestens zwei Ausgangssubstanzen in getrennten Behältern (2, 3), wobei mindestens eine der Ausgangssubstanzen eine Flüssigkeit ist;
B) Befördern einer Ausgangssubstanz nach der andern aus ihrem Behälter (2, 3) in den Tank (4);
C) Beaufschlagen des Tanks (4) vor oder nach dem Schritt B mit Vakuum;
D) Rühren der Substanzen im Tank (4), um die eingefüllten Substanzen zu mischen, wobei das Gemisch eine Flüssigkeit ist;
E) Rühren des flüssigen Gemisches im Tank (4), um das Gemisch zu entgasen;
und eine Produktionsphase, bei der der Tank (4) mit Druckluft beaufschlagt wird, um das flüssige Gemisch aus dem Tank (4) in eine Ausgangsleitung (14) abzugeben, mit den Verfahrensschritten:
F) Öffnen eines in der Ausgangsleitung (14) angeordneten Prozessventils (15), um die Abgabe zu beginnen, und
G) Schliessen des Prozessventils (15), um die Abgabe zu stoppen.

2. Verfahren nach Anspruch 1, **dadurch gekennzeichnet, dass** das Gemisch im Tank (4) bei den Schritten D und E mit einer gleichen Rührgeschwindigkeit gerührt wird.

3. Verfahren nach Anspruch 1 oder 2, **dadurch gekennzeichnet, dass** im Schritt B jede einzelne Füllmenge mit einer Wägezelle (24) abgemessen wird.

4. Verfahren nach einem der Ansprüche 1 bis 3, **dadurch gekennzeichnet, dass** die Substanzen im Schritt B portionenweise in den Tank (4) gefördert werden.

5. Verfahren nach einem der Ansprüche 1 bis 4, **dadurch gekennzeichnet, dass** die Temperatur im Innern des Tanks (4) mindestens während der Produktionsphase auf einen vorbestimmten Wert geregelt wird.

6. Verfahren nach einem der Ansprüche 1 bis 5 zur Herstellung von Linsen durch Giessen, bei dem die Ausgangsleitung (14) zu einer Hohlnadel (16) führt, deren Spitze in eine durch zwei Formschalen (25, 26) und ein Dichtungselement (27) begrenzte Moldkavität (17) mündet, wobei die Moldkavität (17) unter atmosphärischem Druck steht, **dadurch gekennzeichnet, dass** das Druckniveau des von der Druckluft im Tank (4) ausgeübten Drucks vor dem Schritt F auf einen Wert gebracht wird, der vom Abstand (D) an der engsten Stelle der Einfüllöffnung (28) der Moldkavität (17) abhängt, wobei das Druckniveau mit zunehmendem Abstand (D) kontinuierlich oder in diskreten Stufen zunimmt.

7. Verfahren nach Anspruch 6, **dadurch gekennzeichnet, dass** als Sensor für die Detektion, wann die Moldkavität (17) mit Flüssigkeit gefüllt ist, eine weitere Hohlnadel (29) verwendet wird, die mit Luft beaufschlagt wird, und dass der im Inneren der weiteren Hohlnadel (29) herrschende Druck für die Erzeugung des Schliessbefehls für das Prozessventil (15) verwendet wird.
